Europäisches Patentamt

European Patent Office

Office européen des brevets

(19)

(11) Numéro de publication: **0 474 570 B1**

(12) **FASCICULE DE BREVET EUROPEEN**

(45) Date de publication de fascicule du brevet: **10.05.95**

(51) Int. Cl.⁶: **B01J 37/08**, B01J 37/14, B01J 27/22, C01B 31/30, C01B 31/34

(21) Numéro de dépôt: **91420312.0**

(22) Date de dépôt: **04.09.91**

(54) **Procédé d'activation de la surface de carbures de métaux lourds à surface spécifique élevée en vue de réactions catalytiques.**

(30) Priorité: **06.09.90 FR 9011633**

(43) Date de publication de la demande: **11.03.92 Bulletin 92/11**

(45) Mention de la délivrance du brevet: **10.05.95 Bulletin 95/19**

(84) Etats contractants désignés: **BE DE DK ES FR GB IT NL SE**

(56) Documents cités:
EP-A- 0 286 294
US-A- 4 515 763
US-A- 4 518 707
US-A- 4 536 358

**PATENT ABSTRACTS OF JAPAN, vol. 14, no. 453 (C-764), 28 septembre 1990; & JP-A-2 180 641 (IBIDEN CO.) 13-07-1990**

(73) Titulaire: **PECHINEY RECHERCHE (Groupement d'Intérêt Economique géré par l'ordonnance du 23 Septembre 1967)**
**10, place des Vosges**

**Immeuble Balzac**
**La Défense 5**
**F-92400 Courbevoie (FR)**

(72) Inventeur: **Ledoux, Marc-Jacques**
**11, rue d'Ussé**
**F-67000 Strasbourg (FR)**
Inventeur: **Guille, Jean-Louis**
**17, avenue des Vosges**
**F-67000 Strasbourg (FR)**
Inventeur: **Pham-Huu, Cuong**
**18, rue de Copenhague**
**F-67000 Strasbourg (FR)**
Inventeur: **Marin, Sophie**
**3, Place Saint Thomas**
**F-67000 Strasbourg (FR)**

(74) Mandataire: **Mougeot, Jean-Claude et al**
**PECHINEY**
**28, rue de Bonnel**
**F-69433 Lyon Cedex 03 (FR)**

**Description**

## DOMAINE TECHNIOUE

L'invention concerne un procédé d'activation de la surface de carbures de métaux lourds à surface spécifique élevée particulièrement en vue de l'utilisation desdits carbures comme catalyseurs des réactions chimiques ou pétrochimiques, notamment raffinage et transformation des produits pétroliers, conversion des gaz d'échappement....

Ce procédé d'activation consiste à traiter thermiquement le carbure de métaux lourds dans des conditions de température et de durée bien déterminées en présence d'un gaz contenant de l'oxygène.

Les métaux des carbures, objets du procédé selon l'invention, sont principalement les métaux de transition (groupes 3b, 4b, 5b, 6b, 7b, 8 des périodes 4, 5,6 de la classification des éléments), y compris les terres rares (lanthanide) et les actinides. Sont plus particulièrement intéressants Mo, W, Re, V, Nb ou encore Ta, Ti, Cr, Ni.

L'invention s'applique entre autres aux carbures de métaux lourds à grande surface spécifique obtenus par les procédés décrits dans les demandes de brevet EP-A-396475 et FR-A-2657603.

## ETAT DE LA TECHNIOUE

Selon ladite demande EP-A-396475 les carbures de métaux lourds sont obtenus en faisant réagir un de leurs composés à l'état gazeux avec un carbone réactif ayant une surface spécifique élevée (au moins égale à $200 m^2/g$), la quantité de carbone étant généralement en excès, à une température comprise entre 900 et 1400°C.

Toute sorte de carbone actif convient, le charbon actif granulé ou aggloméré convenant plus particulièrement. Ce carbone peut être préalablement dopé par imprégnation à l'aide d'un élément métallique en solution, tel que Ce, Ti, U, Zr, Hf, lanthanide, etc....

La transformation du carbone en carbure peut être complète ou partielle, les particules de carbure ayant alors une partie centrale (ou coeur) en carbone recouverte d'au moins une couche en carbure à grande surface.

On peut également faire réagir successivement différents composés gazeux métalliques avec le carbone réactif, de façon à obtenir des carbures mixtes à surface spécifique élevée. Le coeur peut alors être soit en carbone soit en carbure à surface spécifique élevée, et être recouvert par une ou plusieurs couches de carbures à surface spécifique élevée. Les éléments susceptibles de donner ces carbures mixtes sont ceux cités précédemment plus le silicium, ce dernier pouvant être présent dans la couche externe active mais étant généralement utilisé pour réaliser le coeur du carbure mixte.

Dans la demande FR-A-2657603, les carbures de métaux lourds à surface spécifique élevée sont obtenus par mélange d'une résine exclusivement organique cokéfiable et d'un métal ou d'un de ses composés réductible par le carbone, puis réticulation de ladite résine, et traitement thermique pour cokéfier dans un premier temps la résine, réduire éventuellement le composé métallique et carburer enfin le métal.

La résine est généralement une résine thermoformable à laquelle on peut ajouter différents adjuvants, comme des agents porogènes, des agents générateurs de surfaces spécifiques, des agents dopants....

La quantité de carbone est en léger excès par rapport aux réactions de réduction et de carburation prévues ; la cokéfaction se produit généralement entre 500 et 1000°C et la carburation entre 1000 et 1600°C, ou de préférence entre 1000 et 1300°C, sous atmosphère non oxydante.

Les carbures de métaux lourds à surface spécifique élevée ont habituellement une surface spécifique supérieure à $1,5 m^2/g$, généralement supérieure à $15 m^2/g$ et atteignant couramment plus de $100 m^2/g$, par exemple avec les procédés desdites demandes.

Cependant, ils peuvent avoir leur surface altérée lors de manipulations à l'air, ce qui tend à compromettre leur efficacité pour certaines applications catalytiques. Aussi un traitement de réactivation a-t-il été décrit (EP-A-396475) mettant en oeuvre une imprégnation du carbure par une solution faiblement concentrée d'un sel de métal du groupe 8 suivi d'un traitement thermique sous courant d'hydrogène et d'hydrocarbure.

L'activité obtenue est particulièrement adaptée et efficace pour l'application à la catalyse.

D'autres documents décrivent des traitements de carbures métalliques par un gaz oxydant.

Les brevets US 4 515 763 (Boudart) et US 4 518 707 (Soled) décrivent des traitements de passivation qui s'appliquent aux carbures métalliques préparés en milieu réducteur, mélange d'hydrogène et d'hydrocarbures. De tels carbures, mis sans précaution au contact de l'air, s'enflamment spontanément : ils sont pyrophoriques. La passivation consiste à mettre en contact le catalyseur avec de petites quantités d'un agent oxydant (Boudart), dilué dans un gaz neutre et à la température ambiante (Soled).

Les conditions d'oxydation doivent être très douces pour éviter l'inflammation ; en particulier, la teneur en oxygène de l'agent oxydant doit rester de l'ordre de 1 %.

Le brevet US 4 536 358 (WELSH) décrit au contraire des traitements finaux en milieu oxydant destinés à brûler l'excès de pyropolymère carboné déposé sur un substrat d'oxyde minéral et n'ayant pas été transformé en carbure métallique. Les exemples indiquent, dans le cas du carbure de silicium, des traitements de 20 heures à 600° C.

## OBJET DE L'INVENTION

L'objectif de la présente invention est d'éviter totalement l'emploi de métaux nobles du groupe 8 cités ci-dessus pour obtenir une activation performante pour la catalyse des réactions chimiques et pétrochimiques, telles que par exemple raffinage des produits pétroliers, conversion ou épuration des gaz d'échappement des moteurs à combustion interne et...

Ainsi, la demanderesse a mis au point un procédé d'activation de carbures de métaux lourds à surface spécifique élevée, en particulier ceux obtenus selon l'une quelconque des revendications 1 à 16 de la demande EP-A-396475 ou selon l'une quelconque des revendications 1-2, 4 à 10 de la demande FR 90 01577, caractérisé en ce qu'on les traite thermiquement sous courant de gaz oxydant à une température comprise entre 250 et 450° C en maintenant un palier de température d'une durée d'au moins 3 h et qu'on les refroidit jusqu'à température ambiante toujours sous ledit courant oxydant pour obtenir un catalyseur activé.

Cette phase d'activation sous courant de gaz oxydant est généralement suivie d'une phase d'équilibrage et d'adaptaion des surfaces du catalyseur activé vis-à-vis du produit à traiter catalytiquement. Cette phase d'équilibrage et d'adaptation se déroule en portant le catalyseur activé par oxydation à une température correspondant à celle utilisée dans la réaction catalytique de transformation de produits gazeux envisagée, sous courant d'au moins une partie desdits produits gazeux à traiter, le catalyseur donnant alors progressivement le maximum de son efficacité.

Par exemple, pour les réactions de réformage des produits pétroliers, on peut porter le catalyseur activé par oxydation à une température d'environ 350° C sous courant d'hydrogène de préférence pur ; quand cette température est atteinte, on introduit dans l'hydrogène l'hydrocarbure à traiter. La quasi totalité de l'activité catalytique maximale est atteinte dès la cinquième heure environ.

Le degré de pureté de l'hydrogène influe favorablement sur l'efficacité du catalyseur.

Le traitement oxydant selon l'invention permet, contre toute attente, une activation très performante alors que les manipulations à l'air de carbures à haute surface spécifique sont considérées comme néfastes à leur utilisation comme catalyseurs.

Mais les conditions de ce traitement oxydant sont particulièrement critiques :

- le gaz oxydant utilisé est généralement de l'air, mais ce peut être de l'oxygène pur ou plus ou moins dilué par un gaz inerte. Il n'y a aucun intérêt à trop diluer l'oxygène et l'on utlisera de préférence un gaz contenant au moins 10 % d'oxygène.
- la température doit être comprise entre 250 et 450° C. On a montré qu'à une température inférieure à 250° C, le traitement pour être efficace, devrait avoir une durée rédhibitoire alors que des températures supérieures à 450° C entrainent une destruction irréversible du carbure le rendant inutilisable.
- les durées de traitement doivent être supérieures à 3 heures et de préférence à 10 heures, mais les meilleurs résultats sont obtenus pour des durées de 12 à 16 heures voire supérieures, les performances du catalyseur augmentant avec la durée du traitement.

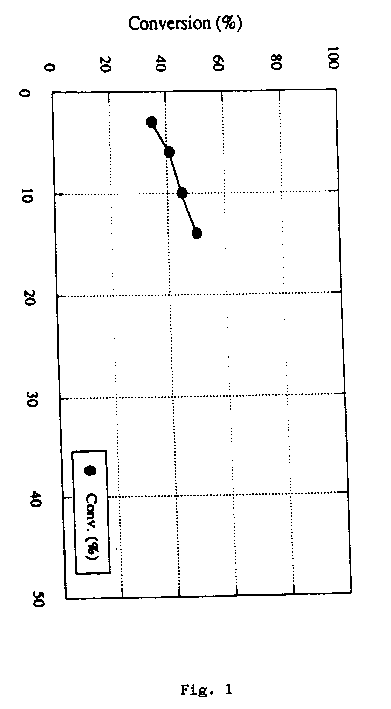

Dans le cas particulier du carbure de molybdène, avec de l'air comme gaz oxydant, la fourchette de température est même encore plus étroite : elle se situe autour de 350° C. L'influence de la durée est très nette. On peut caractériser l'efficacité du catalyseur par le taux de conversion observé au cours de l'isomérisation du n-hexane, taux de reconversion défini comme le pourcentage de n-hexane isomérisé ou craqué au cours de la catalyse. Si l'on porte ce taux en fonction de la durée du traitement d'oxydation, on obtient, ainsi que le montre la figure 1, une relation à peu près linéaire.

On peut donner de ce phénomène une explication plausible. Le traitement oxydant crée dans la proche surface du catalyseur une phase plus ou moins enrichie en oxygène. C'est cette phase enrichie qui est responsable de l'activité catalytique. Si le traitement oxydant est trop bref, la couche de phase enrichie en oxygène est trop mince et est très rapidement recarburée par l'hydrocarbure contenu dans le mélange réactif. Lorsque la durée du traitement oxydant augmente, le carbure s'oxyde de plus en plus profondément et la couche d'oxyde en surface est de plus en plus épaisse.

Ainsi, lorsque les composés oxygénés de surface sont réduits et recarburés par le mélange réactif, une partie est compensée par des atomes d'oxygène diffusant des couches plus profondes vers la surface. Au bout d'un certain temps, un équilibre stable s'établit à la surface du catalyseur entre la disparition en surface des atomes d'oxygène, la diffusion vers la surface des atomes d'oxygène venant des couches profondes et l'arrivée des réactifs, donnant naissance à une phase de carbure plus ou moins riche en oxygène (oxycarbure) qui présente une forte réactivité dans l'isomérisation.

Cela explique également que, comme indiqué dans les exemples, la pleine efficacité du catalyseur ne soit atteinte qu'après un certain temps de passage des réactifs.

Ces hypothèses sont cooroborées, toujours dans le cas du carbure de molybdène, par des analyses XPS qui permettent d'identifier les espèces chimiques et les états de valence sous lesquels le molybdène se trouve en surface.

L'analyse XPS (X-Ray Photoelectron Spectroscopy) consiste à bombarder la surface de l'échantillon par un faisceau de rayons X et à analyser l'énergie cinétique des photoélectrons émis à l'aide d'un spectromètre d'électrons. Sa profondeur de pénétration est de l'ordre de 5 nanomètres, ce qui permet des mesures très fines en surface.

Les mesures ont été faites d'une part sur le catalyseur juste après le traitement d'activation à l'air à une température de 350° C et d'autre part après ce même traitement à l'air pendant trois heures, six heures, dix heures ou quatorze heures, suivi d'une opération de 35 heures de réformage du n-hexane pour amener la catalyseur à son état d'équilibre et d'efficacité optimale. On a pu ainsi mettre en évidence Mo VI, Mo V, Mo IV et le molybdène lié au carbone Mo-C. Les résultats obtenus figurent dans le tableau ci-après, dans lequel les pourcentages sont ceux des atomes superficiels de Mo engagés dans l'espèce chimique indiquée en tête de colonne :

| | Mo VI | Mo V | Mo IV | Mo—C |
|---|---|---|---|---|
| Après act. Avant réform. | 90 % | -- | 7 % | 3 % |
| Après réformage | | | | |
| Activ. 3 h | 18 % | 30 % | 37 % | 16 % |
| Activ. 6 h | 19 % | 32 % | 49 % | 0 % |
| Activ. 10 h | 21 % | 40 % | 38 % | 0 % |
| Activ. 14 h | 16 % | 46 % | 38 % | 0 % |

Le MO VI est entièrement engagé dans l'oxyde $MoO_3$, le Mo V dans un oxycarbure, le Mo IV soit dans un oxycarbure soit dans l'oxyde $MoO_2$.

Les chiffres de la première ligne, correspondant au catalyseur sortant du traitement d'activation sont identiques quelle que soit la durée du traitement. La forte teneur en $MoO_3$ et la faible teneur en molybdène carburé s'expliquent par la brutalité relative de l'activation qui oxyde pratiquement toute la surface.

Les chiffres des lignes suivantes, provenant de mesures sur le catalyseur après 35 heures de réformage du n-hexane, montrent des différences significatives selon la durée du traitement d'activation. La teneur en Mo V, engagé dans un oxycarbure croît avec la durée du traitement. La teneur en Mo IV, engagé peut être lui aussi dans un oxycarbure se stabilise quand la durée du traitement augmente.

Comme l'activité catalytique augmente avec la durée du traitement d'activation, il est donc vraisembable que ces oxycarbures sont, comme on le pensait, responsables de l'activité catalytique.

Le procédé décrit ci-dessus s applique en particulier à tous les carbures à surface spécifique élevée des éléments métalliques, tels que mentionnés plus haut, y compris les carbures mixtes (en particulier ceux ayant un coeur en carbure de silicium, obtenus et décrits dans la demande EP-A-396475. Ils peuvent se présenter sous forme de poudre, granulés, pièces de forme etc.....

Exemple 1

On a effectué un traitement d'activation selon l'invention sur un carbure de molybdène ayant une surface spécifique initiale de 180 $m^2$/g obtenu par le procédé de l'exemple 1 de la demande EP 90420150.6.

Pour cela, on a fait une purge sous courant d'air à température ambiante durant 10 minutes ; puis toujours sous le même courant d'air, on a monté la température à 350°C et on l'a maintenue constante sur un palier durant 14 h, puis on a refroidi jusqu'à température ambiante.

Après ce traitement selon l'invention on a évalué l'aptitude de ce carbure activé à catalyser l'isomérisation du (c'est-à-dire à réformer le) n hexane en présence d'$H_2$.

Pour cela, on a porté 200 mg de catalyseur activé à 350°C sous un courant d'$H_2$ pur habituel (pureté supérieure à 99,95 %, avec comme impureté connue $O_2$ < 5 ppm, $H_2O$ < 5 ppm, $N_2$ < 40 ppm) à pression atmosphérique. Une fois cette température atteinte, on a ajouté le n hexane à réformer de telle façon que sa pression partielle dans le mélange soit de 5 torr.

Les performances catalytiques obtenues lors du réformage ont été relevées en fonction du temps pour évaluer un éventuel effet de vieillissement du catalyseur activé.

Par ailleurs, on a mesuré l'effet de l'emploi d'un hydrogène encore plus pur obtenu par passage dudit hydrogène habituel sur une zéolithe dans l'azote liquide.

Enfin, on a testé l'effet de l'addition d'un poison, bien connu, des catalyseurs (mélange a 2 % de $H_2$ S dans $H_2$).

Après ces traitements, en fin d'essai, le catalyseur activé conserve une surface spécifique de 135 $m^2/g$ et un potentiel remarquable.

L'ensemble de ces résultats est reporté dans le tableau 1 (première partie).

Pour situer l'intérêt indéniable des carbures obtenus selon l'invention, on a effectué une çomparaison en opérant la même réaction de réformage du n hexane, dans les mêmes conditions (350°C, pression d'hydrogène 1 atm, pression partielle de n hexane de 5 torr), en présence d'un catalyseur classique constitué de 0,18 % de Pt sur un support d'alumine. Les résultats de cette catalyse classique en fonction du temps sont également donnés dans le tableau 1 (2ème partie).

Dans ces tableaux :

. α % représente la conversion exprimée par le pourcentage molaire de produit de départ transformé par isomérisation et craquage.

. r : représente la vitesse de conversion exprimée en $10^{-10}$ mole de produit de départ transformé par seconde et rapportée à 1 g de catalyseur. Cela représente l'activité du catalyseur.

. Si % (ou sélectivité C6) : représente la sélectivité, exprimée par la proportion molaire de produit isomérisé présent dans le produit transformé obtenu (exprimé en C6).

. rendement d'isomérisation ($10^{-10}$ mole/s.g) : c'est le produit (rxSi) exprimé en $10^{-10}$ mole d'isomères obtenus par seconde et ramené à un gramme de catalyseur. Ce rendement mesure l'efficacité du catalyseur.

TABLEAU 1

| | ISOMERISATION DU n HEXANE | | | | | | | |
|---|---|---|---|---|---|---|---|---|
| | CATALYSEUR CARBURE DE Mo ACTIVE SELON L'INVENTION | | | | CATALYSEUR CLASSIQUE (0,18 % Pt sur $Al_2O_3$) | | | |
| TEMPS (min) | $\alpha$ (%) | r ($10^{-10}$ mole/s.g) | Si (%) | RENDt (rxSi) ($10^{-10}$ mole/s.g) | $\alpha$ (%) | r ($10^{-10}$ mole/s.g) | Si (%) | RENDt (rxSi) ($10^{-10}$ mole/s.g) |
| | $H_2$ HABITUEL | | | | H2 PURIFIE | | | |
| 0 | 0,23 | 12 | 74 | 9 | 50,66 | 3144 | 79 | 2484 |
| 50 | | | | | 38,44 | 3009 | 81 | 2437 |
| 280 | 17,13 | 794 | 87 | 691 | | | | |
| 1390 | 20,64 | 934 | 89 | 831 | | | | |
| 1440 | $H_2$ PURIFIE | | | | | | | |
| 1450 | 26,95 | 1169 | 91 | 1064 | 12,42 | 1131 | 84 | 950 |
| 1750 | 48,14 | 1736 | 88 | 1528 | 6,01 | 632 | 79 | 499 |
| 2040 | 48,51 | 1742 | 91 | 1585 | | | | |
| 2055 | $H_2$ HABITUEL | | | | | | | |
| 2350 | 20,3 | 922 | 92 | 848 | 4,11 | 446 | 79 | 325 |
| 2885 | $H_2$ PURIFIE | | | | | | | |
| 2985 | 47,26 | 1719 | 91 | 1564 | | | | |
| 4350 | 48,33 | 1739 | 87 | 1513 | 0,76 | 82 | 79 | 65 |
| 4370 | INJECTION DE 5cm³ de $H_2S$(2%) + H | | | | | | | |
| 4375 | 19,11 | 874 | 91 | 795 | | | | |
| 4445 | 42,29 | 1617 | 90 | 1455 | | | | |
| 4555 | INJECTION DE 10cm³ de $H_2S$(2%) + $H_2$ | | | | | | | |
| 4560 | 17,73 | 818 | 93 | 761 | | | | |
| 4645 | 33,35 | 1378 | 92 | 1268 | | | | |

L'examen de ce tableau révèle qu'après activation selon l'invention , le catalyseur à base de carbure a une sélectivité d'environ 90 %, très supérieure à celle du catalyseur classique à base de Pt qui est de l'ordre de 80 %.

En ce qui concerne le pourcentage et la vitesse de conversion, on voit que, si le carbure selon l'invention a un temps de réponse moins immédiat que celui du catalyseur classique au Pt, par contre il atteint rapidement des niveaux supérieurs à celui du Pt.

En fait, le catalyseur à base de Pt est immédiatement efficace (voir la colonne rendement) mais son efficacité décroit régulièrement pour devenir insuffisante après environ 30 heures (rendement de 500) alors qu'au contraire l'efficacité du carbure ne faiblit pas.

Cette efficacité est déjà très élevée dès la cinquième heure et se maintient ensuite continuellement à un niveau supérieur et pratiquement constant d'au moins environ 800.

Le niveau d'efficacité est encore amélioré si on utilise un hydrogène purifié, le rendement étant supérieur à environ 1100 et généralement à environ 1500.

Par ailleurs, après injection de $H_2S$ (poison des catalyseurs habituels), on voit que l'efficacité du catalyseur selon l'invention chute momentanément pour regagner son niveau antérieur, alors qu'il est connu qu'un catalyseur classique au Pt serait devenu inutilisable instantanément.

En résumé, on voit qu'avec le catalyseur à base de carbures de métaux lourds activés selon l'invention, on obtient une sélectivité, un rendement de conversion, un pourcentage de conversion supérieur à ceux d'un catalyseur classique de Pt, une insensibilité remarquable aux poisons desdits catalyseurs classiques, et une durée de vie dont on ne voit pas la limite.

Exemple 2

Cet exemple est destiné à illustrer le fait que le carbure activé selon l'invention est totalement différent d'un catalyseur de l'art antérieur à base d'oxyde de molybdène.

Ce catalyseur a été obtenu en imprégnant un support d'alumine par une solution d'un sel de molybdène décomposable (heptamolybdate d'ammonium).

Ce support imprégné a été calciné en atmosphère neutre pour obtenir un catalyseur d'oxyde de molybdène contenant 6,88 % de Mo.

On a activé ensuite ledit catalyseur d'oxyde de molybdène selon le procédé de l'invention par traitement à 350° C sous courant d'air durant 14h, puis refroidissement à température ambiante.

Ce catalyseur activé a servi ensuite à effectuer l'isomérisation du n hexane dans les mêmes conditions que celles de l'exemple 1, sous courant d'hydrogène purifié.

Les résultats sont donnés dans le tableau 2.

TABLEAU 2

| ISOMERISATION DU n HEXANE CATALYSEUR DE L'ART ANTERIEUR $MoO_2$ sur $Al_2O_3$ | | | |
|---|---|---|---|
| TEMPS ( MIN ) | $\alpha$ (CONVERSION) ( % ) | Si (SELECTIVITE) ( % ) | RENDEMENT ($10^{-10}$ mole/s.g) |
| 0 | 0 | - | 0 |
| 60 | 0,56 | 41 | 20 |
| 90 | 0,76 | 42 | 28 |
| 235 | 1,58 | 34 | 58 |
| 415 | 1,98 | 33 | 72 |
| 1410 | 3,14 | 23 | 113 |
| 1790 | 2,66 | 25 | 97 |
| 1890 | 1,17 | 38 | 43 |
| 1930 | 0,94 | 45 | 34 |
| 1960 | 0,9 | 44 | 33 |

Il apparait que les résultats obtenus sont nettement inférieurs à ceux obtenus avec un catalyseur de carbure activé selon l'invention;

Il est intéressant de noter en particulier que la sélectivité, qui représente la faculté d'obtenir une isomérisation plutôt qu'un craquage, est nettement inférieure (ne dépassant pas 45 %) à celle obtenu avec le carbure activé selon l'invention (supériur à 90 %). Ceci tend à montrer que le catalyseur à base de carbure activé selon l'invention est de nature différente et ne peut pas être assimilé à un oxyde conventionnel qui se formerait lors du traitement d'oxydation ménagée.

On voit également que le rendement après être passé par un maximum (peu élevé d'ailleurs) décroit ensuite régulièrement.

**Revendications**

**1.** Procédé d'activation de carbures de métaux lourds à surface spécifique élevée en vue de leur utilisation comme catalyseur de réactions chimiques ou pétrochimiques, caractérisé en ce que lesdits carbures sont traités thermiquement sous un courant de gaz oxydant à une température comprise entre 250 et 450° C en maintenant un palier de température d'une durée d'au moins 3 h et qu'ils sont refroidis jusqu'à la température ambiante toujours sous ledit courant oxydant pour obtenir un catalyseur activé.

**2.** Procédé selon la revendication 1 caractérisé en ce que la température est d'environ 350 C et la durée du palier supérieure à 10 heures.

**3.** Procédé selon la revendication 2 caractérisé en ce que la durée du palier est comprise entre 12 et 16 heures.

**4.** Procédé selon l'une quelconque des revendications 1 à 3, caractérisé en ce que le gaz oxydant est de l'air ou de l'oxygène pur dilué par une gaz inerte.

**5.** Procédé selon l'une quelconque des revendications 1 à 4, caractérisé en ce que le carbure de métal lourd de surface spécifique élevée est un des carbures des métaux de transition (groupe 3b, 4b, 5b, 6b, 7b, 8 des périodes 4, 5, 6 de la classification des éléments), des terres rares (lanthanides) et des actinides.

**6.** Procédé selon la revendication 5, caractérisé en ce que le carbure de métal lourd de surface spécifique élevée est un carbure de Mo, W, Re, V ou Nb.

**7.** Procédé selon la revendication 2, caractérisé en ce que le carbure de métal lourd de surface spécifique élevée est du carbure de molybdène, que la température du palier est d'environ 350°C et que la durée du palier est supérieure à 16 heures.

**8.** Procédé selon l'une des revendications 1 à 7, caractérisé en ce que le carbure de métal lourd à surface spécifique élevée recouvre un coeur en carbone ou en carbure, y compris carbure de silicium.

**9.** Procédé selon l'une quelconque des revendications 1 à 8, caractérisé en ce qu'on effectue, après le traitement thermique sous gaz oxydant, une phase d'équilibrage et d'adaptation des surfaces du catalyseur activé consistant à porter ledit catalyseur à une température correspondant à celle utilisée pour une transformation catalytique de produits gazeux envisagés, sous courant d'une partie seulement des constituants desdits produits gazeux à traiter.

**10.** Procédé selon la revendication 9, caractérisé en ce que la température est d'environ 350°C et le courant gazeux est constitué d'hydrogène.

## Claims

**1.** A process for the activation of carbides of heavy metals with a large specific surface with a view to their use as a catalyst for chemical or petrochemical reactions, characterised in that said carbides are treated thermally in an oxidising gas flow at a temperature of between 250 and 450°C, whilst maintaining a temperature level of at least 3 h, and in that they are cooled to ambient temperature, still in said oxidising flow, to obtain an activated catalyst.

**2.** A process according to Claim 1, characterised in that the temperature is approximately 350°C and the duration of the temperature level is more than 10 hours.

**3.** A process according to Claim 2, characterised in that the duration of the temperature level is between 12 and 16 hours.

**4.** A process according to any one of Claims 1 to 3, characterised in that the oxidising gas is air or pure oxygen diluted by an inert gas.

**5.** A process according to any one of Claims 1 to 4, characterised in that the heavy metal carbide with a large specific surface is one of the transition metal carbides (group 3b, 4b, 5b, 6b, 7b, 8 of periods 4, 5, 6 of the classification of elements), rare earths (lanthanides) and actinides.

**6.** A process according to Claim 5, characterised in that the heavy metal carbide with a large specific surface is a carbide of Mo, W, Re, V or Nb.

**7.** A process according to Claim 2, characterised in that the heavy metal carbide with a high specific surface is molybdenum carbide, that the temperature level is about 350°C and that the duration of the stage is more than 16 hours.

**8.** A process according to one of Claims 1 to 7, characterised in that the heavy metal carbide with a large specific surface covers a carbon or carbide core, including silicon carbide.

**9.** A process according to any one of Claims 1 to 8, characterised in that following the heat treatment in oxidising gas there is a phase for balancing and adapting the surfaces of the activated catalyst consisting in bringing said catalyst to a temperature which corresponds to that used for catalytic conversion of the gaseous products intended, in a flow of only part of the constituents of said gaseous products to be treated.

10. A process according to Claim 9, characterised in that the temperature is 350°C, and the gaseous flow is constituted by hydrogen.

**Patentansprüche**

1. Verfahren zur Aktivierung von Schwermetallkarbiden mit einer erhöhten spezifischen Oberfläche zwecks ihrer Verwendung als Katalysator chemischer oder petrochemischer Reaktionen,
dadurch gekennzeichnet,
daß die Karbide unter einem Strom von oxidierendem Gas bei einer Temperatur im Bereich von 250 bis 450 °C unter Aufrechterhaltung eines Temperaturniveaus einer Dauer von wenigstens 3 h wärmebehandelt werden und daß sie noch immer unter dem oxidierenden Strom bis auf die Umgebungstemperatur abgekühlt werden, um einen aktivierten Katalysator zu erhalten.

2. Verfahren nach dem Anspruch 1, dadurch gekennzeichnet, daß die Temperatur etwa 350 °C ist und die Dauer des Niveaus über 10 Stunden liegt.

3. Verfahren nach dem Anspruch 2, dadurch gekennzeichnet, daß die Dauer des Niveaus im Bereich von 12 bis 16 Stunden ist.

4. Verfahren nach irgendeinem der Ansprüche 1 bis 3, dadurch gekennzeichnet, daß das oxidierende Gas Luft oder durch ein inertes Gas verdünnter reiner Sauerstoff ist.

5. Verfahren nach irgendeinem der Ansprüche 1 bis 4, dadurch gekennzeichnet, daß das Schwermetallkarbid erhöhter spezifischer Oberflache eines der Karbide der Übergangsmetalle (Gruppe 3b, 4b, 5b, 6b, 7b,, 8 der Perioden 4, 5, 6 des Systems der Elemente), der Seltenen Erden (Lanthanide) und der Actiniden ist.

6. Verfahren nach dem Anspruch 5, dadurch gekennzeichnet, daß das Schwermetallkarbid erhöhter spezifischer Oberfläche ein Mo-, W-, Re-, V- oder Nb-Karbid ist.

7. Verfahren nach dem Anspruch 2, dadurch gekennzeichnet, daß das Schwermetallkarbid erhöhter spezifischer Oberfläche Molybdänkarbid ist, daß die Temperatur des Niveaus etwa 350 °C ist und daß die Dauer des Niveaus über 16 Stunden ist.

8. Verfahren nach einem der Ansprüche 1 bis 7, dadurch gekennzeichnet, daß das Schwermetallkarbid erhöhter spezifischer Oberfläche einen Kern aus Kohlenstoff oder aus Karbid einschließlich Siliziumkarbid bedeckt.

9. Verfahren nach irgendeinem der Ansprüche 1 bis 8, dadurch gekennzeichnet, daß man nach der Wärmebehandlung unter oxidierendem Gas eine Ausgleichs- und Anpassungsphase der Oberflächen des aktivierten Katalysators durchführt, die darin besteht, den Katalysator auf eine Temperatur, die der für eine katalytische Umwandlung von angestrebten gasförmigen Produkten verwendeten entspricht, unter einem Strom nur eines Teils der Bestandteile der zu behandelnden gasförmigen Produkte zu bringen.

10. Verfahren nach dem Anspruch 9, dadurch gekennzeichnet, daß die Temperatur etwa 350 °C ist und der Gasstrom aus Wasserstoff besteht.

Fig. 1